# EUROPÄISCHE PATENTANMELDUNG

(11) **EP 1 517 415 A1**
(43) Veröffentlichungstag der Anmeldung: **23.03.2005**
(21) Anmeldenummer: 03021085.0
(22) Anmeldetag: 18.09.2003
(51) Int. Cl.: H01S 5/14, H01S 5/065, G01C 1/02, G01S 17/89, G01C 3/00

(54) **Geodätisches Gerät mit einer Laserquelle**

(71) Anmelder: Leica Geosystems AG, 9435 Heerbrugg (CH)
(72) Erfinder: Braunecker, Bernhard, Dr., 9445 Rebstein (CH); Gächter, Bernhard, Dr., 9436 Balgach (CH)
(74) Vertreter: Kaminski, Susanne, Dr.

(57) **Zusammenfassung**

Zur Verbesserung der Emission von Laserstrahlung wird in einem geodätischen Gerät (1) eine Laserquelle (2) verwendet, in welcher die Strahlung multimodal emittierender Laserdioden (2b) durch eine modenselektive Komponente (2d) so beeinflusst wird, dass die von der Laserquelle (2) emittierte Laserstrahlung monomodalen Charakter besitzt.

Hierfür wird ein Kantenemitter (2b) oder ein vertikaler Halbleiteremitter mit einer externen Kavität betrieben, in der sich eine modenselektive Komponente (2d) befindet, z.B. eine Monomodefaser oder Resonatorspiegel, die einen modenselektiven Resonatoraufbau bewirken.

Zur Kompensation der durch die verlängerte Kavität erzielten grösseren Pulsdauer können zur Pulskompression Komponenten mit negativer Dispersion verwendet werden.

## Beschreibung

Die Erfindung betrifft ein geodätisches Gerät mit einer Laserquelle nach dem Oberbegriff des Anspruch 1.

In vielen geodätischen Anwendungen ist die Emission von Laserlicht erforderlich oder vorteilhaft. Dies betrifft beispielsweise die Entfernungsmessung, Zielbeleuchtung oder auch die Messung physikalischer Eigenschaften, wie z.B. zur Dispersionskorrektur oder bei LIDAR-Systemen zur Analyse der Luftverschmutzung. Geeignete Verfahren und Vorrichtungen zur Entfernungsmessung werden beispielsweise in der EP 0 738 899 B1 und der zum Anmeldezeitpunkt noch nicht veröffentlichten europäischen Patentanmeldung Nr. 03003738 beschrieben.

Hinsichtlich der Emissionscharakteristik der Laserstrahlung werden durch die verschiedenen Anwendungen unterschiedliche Anforderungen gestellt. Allgemein bedingen die zu überbrückenden bzw. zu messenden Entfernungen jedoch möglichst hohe Leistungen der Laserquellen im Dauer- oder zumindest Pulsbetrieb. Sofern eine Position oder Entfernung bestimmt werden muss, treten hierzu noch weitere Anforderungen, um mit Genauigkeiten im Millimeter- oder Submillimeterbereich messen zu können. Beispiele hierfür stellen interferometrische Vermessungssysteme, die über ca. 60 Meter Entfernung Genauigkeiten im Bereich von 20 µm gewährleisten müssen, oder aber luftgestützte scannende Systeme mit 6 km Entfernung und einer erforderlichen Genauigkeit von ca. 30 cm dar.

Unter dem Begriff "geodätisches Gerät mit einer Laserquelle" soll in diesem Zusammenhang verallgemeinernd stets ein Messinstrument oder ein Instrument verstanden werden, das in Zusammenhang mit Messungen verwendet wird, wie z.B. ein Entfernungsmesser, LIDAR-System oder ein Theodolit, wobei dieses Laserstrahlung emittiert und zur Messung oder Überprüfung von Daten mit räumlichem Bezug dient. Insbesondere betrifft dies die Messung von Entfernung und/oder Richtung bzw. Winkeln zu einem Bezugsoder Messpunkt. Darüber hinaus können jedoch durch die Strahlungsquelle auch andere oder ergänzende Aufgaben erfüllt werden, wie z.B. die Bereitstellung eines sichtbaren Laserstrahls für analytische Zwecke, zur Markierung eines Ziels oder zur Darstellung des Aufpunktes eines Lasers im nichtsichtbaren Spektralbereich. Insbesondere sollen hier unter einem solchen geodätischen Gerät dreidimensional scannende Systeme, Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Beobachtungs-, Feuerleit- bzw. Richtkreisanwendungen oder in der industriellen Bauwerksoder Prozessüberwachung; diese Systeme werden hiermit ebenfalls unter dem Begriff "geodätisches Gerät mit einer Laserquelle" erfasst.

Die für diesen wichtigsten Anwendungsbereich resultierenden Anforderungen an die Laseremission von geodätischen Geräten betreffen die Leistung und die Modenstruktur. Während bei kontinuierlicher Emission Leistungen im mW-Bereich erzielt werden, ist es für Entfernungsmessungen über grössere Distanzen vorteilhaft, Leistungen im Bereich einiger 10 W zu erreichen, die bei Pulsbetrieb insbesondere durch kurze, aber hochenergetische Pulse erreicht werden können. Daneben sollte ein möglichst kleiner und homogener Strahlquerschnitt zur Verfügung gestellt werden, so dass auch eine Auflösung kleiner Strukturen möglich ist. Der Strahlquerschnitt bzw. das Strahlprofil sollte nach Möglichkeit über die gesamte Messdistanz gleich bleiben bzw. nur geringfügig ändern. Aus diesem Grund ist es vorteilhaft, die Emission der TEMₒₒ -Mode zu nutzen und das Auftreten höherer Moden zu unterdrücken, da diese eine grössere Ausdehnung und Strukturierung aufweisen. Eine solche Mode weist ein ideales Gauss-Profil auf und quer zum Strahl treten keine Phasenverschiebungen im elektrischen Feld auf, so dass der Strahl vollständig räumlich kohärent ist.

In geodätischen Geräten des Stands der Technik werden als Laserquellen häufig Laserdioden eingesetzt. Diese Halbleiterlaser haben jedoch den Nachteil, dass sie im Multi-Mode-Betrieb emittieren und als Kantenemitter einen geometrisch ungünstigen Strahlquerschnitt aufweisen.

So existieren im Stand der Technik verschiedene Ansätze, die Emission einer Laserdiode durch geeignete Strahlformungsmittel in eine vorteilhaftere Form zu überführen.

Beispielsweise ist aus der WO 01/84077 ein optischer Entfernungsmesser bekannt, der die Teilstrahlen einer kantenemittierenden Laserdiode durch eine nachgeordnete Strahlformungsoptik derart ablenkt und auf die Apertur einer Objektivlinse lenkt, dass sie dieselbe im wesentlichen ausfüllen. Dabei besitzt die Emission der Laserdiode jedoch noch immer eine Multi-Mode-Charakteristik.

Die zur Leistungssteigerung ebenfalls mögliche Kombination der Emission von vielen einzelnen Laserdioden eines Arrays in einen gemeinsamen Strahl besitzt zudem den Nachteil mangelnder Kohärenz.

Zur Vermeidung dieser Nachteile ist es grundsätzlich möglich, auch andere Lasertypen, z.B. durch Halbleiterlaser gepumpte Mikro-Chip-Festkörperlaser im Single-Mode-Betrieb, in geodätischen Geräten zu verwenden. Allerdings besitzen diese den Nachteil grosser Abmessungen, eines hohen Energieverbrauchs und einer ungünstigen Betriebscharakteristik, z.B. aufgrund thermischer Effekte. Dadurch wird die Praxistauglichkeit solcher Lösungen für den Einsatz zur Vermessung im Feld eingeschränkt.

Die Verwendung von reinen Single-Mode-Laserdioden führt zwar zu einer kohärenten Emission mit einer fast gaussförmigen Energieverteilung und damit zu einem grundsätzlich geeigneten Strahlprofil, allerdings sind die im sichtbaren Spektralbereich erreichbaren Leistungen kommerziell erhältlicher Single-Stripe-Single-Mode-Laserdioden oder Tapered-Single-Stripe-Single-Mode-Laserdioden bisher zu gering. Im Bereich hoher Leistungen, wie sie beispielsweise durch einen Pulsbetrieb dieser Laserdioden erreicht werden könnten, erfährt der Strahl Abweichungen von dem gewünschten Gauss-Profil. Ein solcher Pulsbetrieb kann zudem unter Umständen zu weiteren Nachteilen, wie z.B. einer verringerten Lebensdauer durch Hole-Burning, sowie zum Auftreten weiterer Moden führen.

Eine Aufgabe der vorliegenden Erfindung besteht darin, ein geodätisches Messgerät mit einer Laserquelle bereitzustellen, dessen Emission bei gleicher Leistung eine verbesserte Strahlqualität bzw. bei gleicher Strahlqualität eine höhere Leistung oder sowohl höhere Leistung als auch verbesserte Strahlqualität aufweist.

Eine weitere Aufgabe der vorliegenden Erfindung besteht darin, bauliche Verbesserungen in Hinblick auf Grösse, Komplexität, Energieverbrauch und/oder Aufbau für ein geodätisches Messgerät mit Laserquelle zu ermöglichen.

Eine weitere Aufgabe der vorliegenden Erfindung besteht darin, die Nutzung der durch kommerziell erhältliche Laserdioden erzielbaren Variationsmöglichkeiten in der Gestaltung der Laseremission auch für geodätische Geräte zu ermöglichen.

Eine weitere Aufgabe der vorliegenden Erfindung besteht darin, für Halbleiterdioden eine Beeinflussung der emittierten Strahlung, z.B. in Hinblick auf die Form der Emissionswellenfront, zu ermöglichen.

Diese Aufgaben werden erfindungsgemäss durch die Merkmale des Anspruchs 1 oder durch Merkmale der Unteransprüche gelöst bzw. diese Lösungen weitergebildet.

Die Erfindung betrifft die Beeinflussung des Strahlungsfeldes im Resonator der Laserquelle eines geodätischen Gerätes. Erfindungsgemäss wird als strahlungserzeugendes Element im Resonator eine Halbleiter-Laserdiode verwendet, die ohne weitere Massnahmen im Multi-Mode emittieren würde, deren Strahlung aber durch eine modenselektive Komponente so beeinflusst wird, dass die von der Strahlungsquelle ausgesandte Strahlung eine monomodale Charakteristik aufweist. Hierfür geeignete Laserdioden sind in grosser Auswahl und Variationsbreite kommerziell erhältlich. Insbesondere reichen die verfügbaren Wellenlängenbereiche vom infraroten bis in den violetten Bereich, so dass eine auf den Anwendungszweck abgestimmte spektrale Emission möglich wird.

Die Laserdiode wird als eine Komponente in einen Resonator eingebracht bzw. stellt ein Ende eines solchen Resonators dar, so dass die Kavität auch durch einen externen Anteil ausserhalb der Laserdiode definiert wird. Das sich in dieser Kavität bzw. dem Resonator ausbreitende Strahlungsfeld wird durch die modenselektive Komponente so beeinflusst, dass eine monomodale Emission der Strahlungsquelle auftritt und/oder die Laserdiode selbst zur monomodalen Emission veranlasst wird.

Als Laserdiode kann ein herkömmlicher Kantenemitter oder auch eine vertikal emittierende Diode, wie z.B. ein Vertical Cavity Surface Emitting Laser (VCSEL) oder ein Novalux Extended Cavity Surface Emitting Laser (NECSEL) verwendet werden. Der Aufbau eines solchen NECSEL wird beispielsweise in der WO 01/67563 A2 geoffenbart. Der Vorteil dieser vertikal emittierenden Laserdioden liegt unter anderem darin, dass durch den im wesentlichen kreisförmigen Strahlquerschnitt auf eine nachgeordnete Strahlformung verzichtet werden kann.

Um eine Verwendung einer solchen handelsüblichen Laserdiode mit einer externen Kavität zu ermöglichen, müssen gegebenenfalls noch Modifikationen und Anpassungen vorgenommen werden. Insbesondere kann es erforderlich sein, Spiegel oder Beschichtungen zu entfernen, welche den Resonator der Laserdiode definieren. Für solche Aufgaben können beispielsweise Plasmaätzverfahren verwendet werden. Bei herkömmlichen, kantenemittierenden Laserdioden werden jedoch zumeist keine Spiegel aufgebracht, sondern nur die senkrecht zum Übergang verlaufenden Stirnflächen poliert. Hier kann es erforderlich sein, die reflektierende Wirkung zu verringern, z.B. beispielsweise in Form einer Antireflexbeschichtung.

Als modenselektives Element können grundsätzlich die in der allgemeinen Laserphysik üblichen Komponenten verwendet werden, wie z.B. geeignet geformte Spiegel zur Auslegung instabiler bzw. modenselektiver Resonatoren, sättigbarer Absorber oder Interferometer. In diesem Zusammenhang können jedoch insbesondere Single-Mode-Fasern oder (Loch-)-Blenden als modenselektive Komponenten Verwendung finden. Durch diese Komponenten wird innerhalb des Resonators das Entstehen bzw. Anschwingen höherer Moden unterdrückt, so dass der umlaufende Strahlungspuls weitgehend monomodal ist.

Der Resonator bzw. die Kavität wird durch einen Spiegel und einen teilweise durchlässigen Spiegel definiert, wobei die vollständig reflektierende Seite der Laserdiode als einer der Resonatorspiegel verwendet werden kann. Zur Ein- und Auskopplung der Strahlung in das bzw. aus dem modenselektiven Element kann eine entsprechende Optik aus Linsen oder Zylinderlinsen verwendet werden, wobei jedoch erfindungsgemäss auch Fasern, reflektive oder diffraktive Elemente Verwendung finden können.

Aufgrund der im Vergleich zur unveränderten Laserdiode grösseren Resonatorlänge kann es vorteilhaft sein, eine Kompensation der hierdurch entstehenden Vergrösserung der Pulslänge zu bewirken. Zur Erzielung der hierfür erforderlichen negativen Dispersion können allgemein in der Laserphysik verwendete Komponenten verwendet werden. So erlauben beispielsweise Prismen- bzw. Gitterpaare oder Gires-Tournois-Interferometer (GTI) eine geeignete Pulskompression. Darüber hinaus können solche oder andere Elemente mit pulsbeeinflussender Wirkung, wie z.B. auch sättigbare Absorber, zur Formung und zeitlichen wie räumlichen Gestaltung des Strahlungsfeldes in der Kavität bzw. des Pulses verwendet werden. Durch die Verwendung einer externen Kavität können die Gestaltungsmöglichkeiten solcher Komponenten erfindungsgemäss auch im Zusammenhang mit Halbleiterlasern und in geodätischen Geräten genutzt werden.

Zur Verstärkung der in der strahlerzeugenden Laserdiode generierten Strahlung kann ein ausserhalb des Resonators befindlicher Verstärker verwendet werden. Vorteilhaft ist hierfür die Verwendung einer zweiten Multi-Mode-Laserdiode, die ohne reflektierende Beschichtungen bzw. mit Antireflexbeschichtungen im Durchstrahlbetrieb in Form eines Master Oscillator Power Amplifiers (MOPA) genutzt wird. Es kann in dieser Konfiguration vorteilhaft sein, die Wellenlänge der als Master-Oszillator dienenden strahlungserzeugenden Laserdiode zu stabilisieren, damit diese genau das Maximum der spontanen Emission des Verstärkers trifft.

Für hochgenaue Entfernungsmessungen ist es vorteilhaft, wenn die Strahlungsquelle Strahlung mit einer gut definierten optischen Pulsform bereitstellt. Diese sollte eine ebene, nicht gekrümmte Emissionswellenfront und eine Pulsdauer von unter 500 ns aufweisen.

Aufgrund der Abmessungen der Bauteile und der geringen Strahlquerschnitte und Modenprofile ist die hochgenaue und stabile Positionierung ein kritisches Erfordernis. Vorteilhafterweise können daher alle Komponenten der Laserquelle und ggf. auch nachgeordnete optische Komponenten auf einer gemeinsamen Grundplatte angebracht oder auf einem gemeinsamen Substrat realisiert werden. Ein hinsichtlich Montageanforderungen und der notwendigen Positioniergenauigkeit geeignetes optisches Bauelement bzw. Gesamtsystem wird in der DE 195 33 426 A1 beschrieben. In der WO 99/26754 sowie in der zum Anmeldezeitpunkt noch nicht veröffentlichten europäischen Patentanmeldung Nr. 02026648 werden geeignete Verfahren zur Lötbefestigung miniaturisierter Bauteile auf einer Grundplatte dargestellt. Ein geeignetes Verfahren zum Fixieren eines miniaturisierten Bauteils auf einer Trägerplatte, insbesondere zur Feinadjustierung von optischen Komponenten, ist beispielsweise in der zum Anmeldezeitpunkt noch nicht veröffentlichten europäischen Patentanmeldung Nr. 02026650 beschrieben.

Ein erfindungsgemässes geodätisches Gerät und hierfür geeignete erfindungsgemässe Laserquellen werden nachfolgend anhand von in der Zeichnung schematisch dargestellten Ausführungsbeispielen rein beispielhaft näher beschrieben. Im einzelnen zeigen
- Fig.1: die schematische Darstellung eines erfindungsgemässen geodätischen Gerätes mit einer erfindungsgemässen Laserquelle;
- Fig.2: die schematische Darstellung einer ersten erfindungsgemässen Laserquelle mit einer Single-Mode-Faser als modenselektiver Komponente;
- Fig.3: die schematische Darstellung einer zweiten erfindungsgemässen Laserquelle mit einer ersten geeigneten Resonatorspiegelanordnung als modenselektiver Komponente;
- Fig.4: die schematische Darstellung einer dritten erfindungsgemässen Laserquelle mit einer zweiten geeigneten Resonatorspiegelanordnung als modenselektiver Komponente;
- Fig.5: die schematische Darstellung einer vierten erfindungsgemässen Laserquelle mit einer Blende als modenselektiver Komponente;
- Fig.6: die schematische Darstellung einer fünften erfindungsgemässen Laserquelle mit einer vertikal emittierenden Laserdiode (VCSEL) als strahlungserzeugender Laserdiode und einer Single-Mode-Faser als modenselektiver Komponente;
- Fig.7: die schematische Darstellung einer sechsten erfindungsgemässen Laserquelle mit einer kantenemittierenden Laserdiode, einer Single-Mode-Faser als modenselektiver Komponente und einer Laserdiode als Verstärker;
- Fig.8: die schematische Darstellung einer siebten erfindungsgemässen Laserquelle mit einer kantenemittierenden Laserdiode, einer Blende als modenselektiver Komponente und einer Laserdiode als Verstärker;
- Fig.9: die schematische Darstellung einer achten erfindungsgemässen Laserquelle mit einer vertikal emittierenden Laserdiode (VCSEL), einer Single-Mode-Faser als modenselektiver Komponente und einer Laserdiode als Verstärker;
- Fig.10: die schematische Darstellung einer neunten erfindungsgemässen Laserquelle mit einer kantenemittierenden Laserdiode, einer Single-Mode-Faser als modenselektiver Komponente und einem Gitterpaar zur Pulskompression; und
- Fig.11: die schematische Darstellung einer zehnten erfindungsgemässen Laserquelle mit einer kantenemittierenden Laserdiode, einer Single-Mode-Faser als modenselektiver Komponente und einem Gires-Tournois-Interferometer zur Pulskompression.

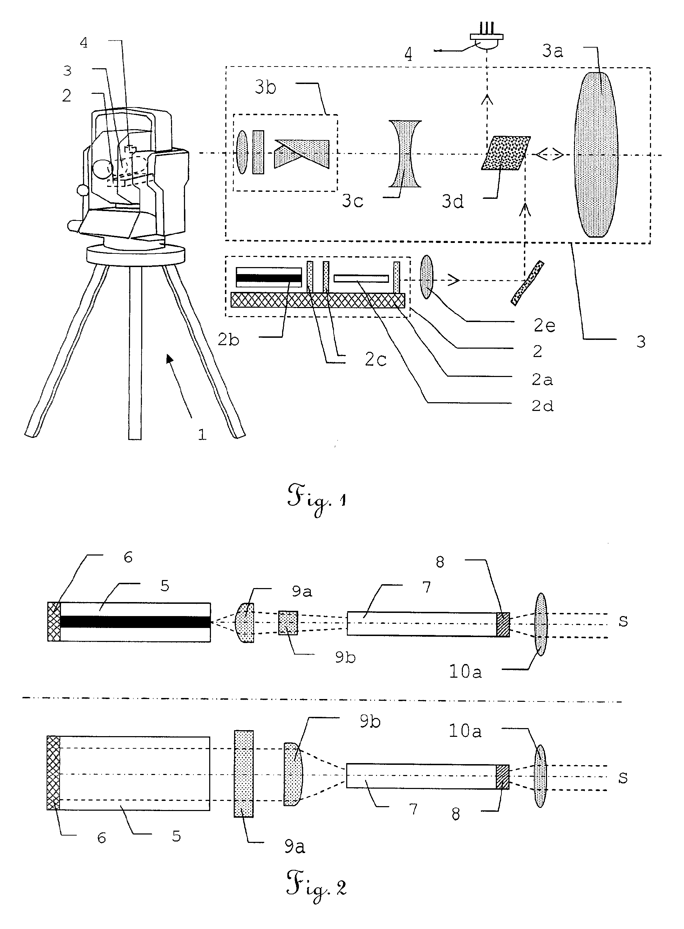

In Fig.1 wird ein Tachymeter als ein Beispiel für ein erfindungsgemässes geodätisches Gerät 1 zusammen mit einer näheren Erläuterung einiger seiner Komponenten in Form einer Detaildarstellung gezeigt. Im Gehäuse des Gerätes 1 befinden sich als Komponenten eine Laserquelle 2, ein optische System 3 zur Erfassung von zu vermessenden Zielen und ein Empfänger 4.

Die Laserquelle 2 weist eine Basisplatte 2a auf, auf der sämtliche Bestandteile montiert sind. Die Laserstrahlung wird von einer strahlungserzeugenden Laserdiode 2b emittiert und über eine Ein-/Auskoppeloptik 2c in eine modenselektive Komponente 2d geführt, wobei sich diese Komponenten innerhalb einer Kavität befinden, so dass die strahlungserzeugenden Laserdiode 2b über eine externe Kavität verfügt. Die aus der Kavität und damit aus der Laserquelle 2 austretende Strahlung kann durch eine nachgeschaltete strahlformende Optik 2e beeinflusst werden.

Das optische System 3 zur Erfassung von zu vermessenden Zielen weist eine Objektivlinse 3a und eine Okulareinheit 3b auf. Zwischen diesen Komponenten befindet sich ein Fokussierglied 3c und ein reflektierendes Umlenkmittel 3d, mit dessen Hilfe die von der Laserquelle 2 stammende Strahlung in den Strahlgang des optischen Systems 3 eingekoppelt und über die Objektivlinse 3a emittiert wird. Von einem Ziel zurückreflektierte Strahlung wird wiederum von der Objektivlinse 3a erfasst und ein Teil der Strahlung wird von dem reflektierenden Umlenkmittel 3d auf einen Empfänger 4 geführt.

In dieser Anordnung kann die Strahlung der Laserquelle 2 im zusammenwirken mit dem Empfänger 4 beispielsweise zu einer Entfernungsmessung zu einem Ziel verwendet werden. Das dargestellte Beispiel ist nur eine von vielen möglichen Ausführungsformen erfindungsgemässer geodätischer Geräte und dient zur exemplarischen Verdeutlichung eines möglichen Zusammenwirkens von Komponenten.

Eine erste erfindungsgemässe Laserquelle mit einer Single-Mode-Faser als modenselektiver Komponente wird in Fig.2 schematisch dargestellt. Dabei zeigt, wie auch in den folgenden Figuren, die obere Abbildung eine Seitenansicht des Aufbaus, welche der Fast axis entspricht, wohingegen die untere Abbildung einer Draufsicht und damit der Slow axis entspricht. Die Laserquelle besitzt als strahlungserzeugendes Element eine kantenemittierende Laserdiode 5, deren eine Seite einen Resonatorspiegel 6 bildet. Gegebenenfalls kann hier auch ein zusätzlicher ebener Spiegel oder eine Beschichtung auf die Seitenfläche der Laserdiode aufgebracht werden. Die Emission dieser kantenemittierenden Laserdiode 5 wird über zwei Zylinderlinsen 9a und 9b in eine Single-Mode- bzw. Monomodefaser 7 als modenselektive Komponente eingekoppelt. Diese anamorphotische Ausgestaltung der Ein-/Auskoppeloptik resultiert aus der starken Asymmetrie der Emission. Die Monomodefaser 7 wird an einem Ende durch einen Auskoppelspiegel 8 abgeschlossen, der damit einen zweiten Resonatorspiegel darstellt und somit das Ende der externen Kavität für die kantenemittierenden Laserdiode 5 definiert. Durch die Reflexionen in der Monomodefaser 7 wird der Anteil höherer Moden im Strahlungsfeld reduziert und nach der Reflexion am Auskoppelspiegel 8 weitgehend monomodale Strahlung zurück in die kantenemittierenden Laserdiode 5 geführt. Durch diese Auslegung schwingt in der Kavität aufgrund der Verluste in der Monomodefaser 7 nur eine Mode an, die in den Resonatorumläufen verstärkt und über den Auskoppelspiegel 8 und gegebenenfalls eine nachgeschaltete Linse 10a als nutzbare Laserstrahlung S emittiert wird.

Die Monomodefaser 7 kann als Faser mit einer geometrisch von der Zylinderform abweichenden Innenseite ausgebildet sein, wobei als Innenseite der die Reflexion bestimmende Bereich bzw. eine solche Grenzschicht im Inneren der Faser betrachtet wird. Diese Innenseite kann insbesondere eine konische oder gekrümmte Form aufweisen, wobei letztere auch durch eine geeignete Verformung einer Faser mit zylindrischer Form erreicht werden kann. Alternativ oder ergänzend kann die Monomodefaser 7 auch als Gradientenfaser mit in Faserrichtung veränderlichem Brechungsindex-Profil ausgebildet sein, so dass ein zum konischen Verlauf der Innenseite ähnlicher Effekt folgt. Durch diese spezielle Formgebung bzw. Ausgestaltung kann eine erfindungsgemässe Selektion von Moden bewirkt werden.

Die Monomodefaser 7 kann beispielsweise als Lichtleiter mit von der Geometrie der idealen Zylinderform abweichender Innenseite ausgebildet werden. Durch die so realisierbare Wahl der Reflexionsbedingungen kann die Ausbreitung der unterschiedlichen Moden in der Faser so beeinflusst werden, dass höhere Moden unterdrückt bzw. deren Anschwingen im Resonator verhindert werden. Geeignete Abweichungen stellen beispielsweise die konische Ausformung der Innenseite oder eine leichte Krümmung der Faser dar. Die Monomodefaser 7 kann jedoch auch ohne Veränderung geometrischer Formen hinsichtlich der Transmission ausgewählter Moden optimiert werden. Ein Beispiel hierfür stellt die Ausbildung als Gradientenfaser mit in Faserrichtung veränderlichem Brechungsindex-Profil dar.

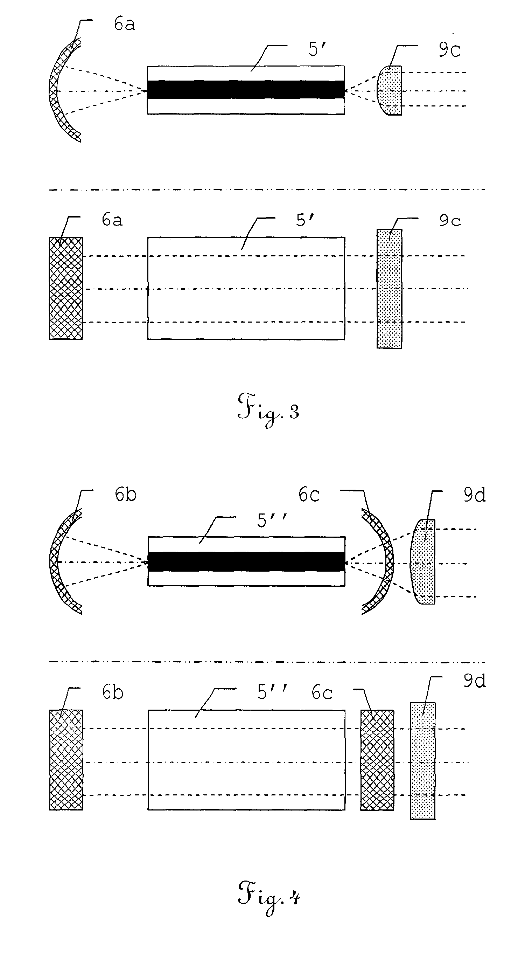

Fig.3 zeigt die schematische Darstellung einer zweiten erfindungsgemässen Laserquelle mit einer ersten geeigneten Resonatorspiegelanordnung als modenselektiver Komponente. Im Gegensatz zur in Fig.2 dargestellten Ausführungsform wird die Laserquelle mit kantenemittierenden Laserdiode 5' durch eine spezielle Resonatorspiegelgestaltung in der Kavität zur Emission monomodaler Strahlung veranlasst. Die in Fig.2 als Resonatorspiegel wirkende Seite der kantenemittierenden Laserdiode 5' wird hier durchlässig ausgestaltet und die Kavität nutzt einen separaten, externen Hohlspiegel als Resonatorspiegel 6a, durch den zusammen mit dem in Fig.2 dargestellten ebenen Auskoppelspiegel der Monomodefaser oder eine spiegelnde Wirkung der entgegengesetzten Seite der Laserdiode die Eigenschaft eines hemisphärischen oder hemikonzentrischen Resonators erreicht wird. Höhere Moden werden in einem solchen Aufbau gegenüber der mit geringeren Verlusten versehenen Grundmode gedämpft. Die stark divergente Emission der kantenemittierenden Laserdiode 5' kann durch eine Zylinderlinse 9c in Richtung der Fast axis kollimiert werden.

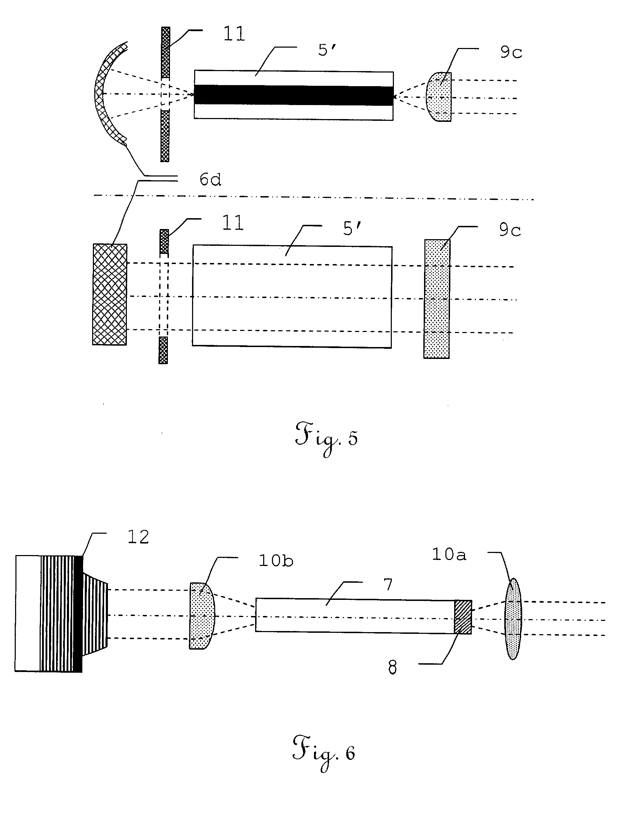

Eine dritte erfindungsgemässe Laserquelle mit einer zweiten geeigneten Resonatorspiegelanordnung als modenselektiver Komponente zeigt Fig.4. Die kantenemittierenden Laserdiode 5" wird so modifiziert, dass sie keine reflektierenden Seiten mehr aufweist. Die Kavität wird nun durch zwei Hohlspiegel als Resonatorspiegel 6b und 6c definiert, wobei diese zusammen als modenselektive Komponente wirken und eine Emission aufgrund der teildurchlässigen Eigenschaften des Resonatorspiegels 6c erreicht wird. Durch diesen Aufbau wird die externe Kavität als konfokaler Resonator ausgebildet. Die durch den Resonatorspiegel 6c tretende und divergente Strahlung wird durch eine Zylinderlinse 9d in Richtung der Fast axis kollimiert.

Eine vierte erfindungsgemässe Laserquelle wird in Fig.5 dargestellt, wobei eine Blende 11 als modenselektive Komponente verwendet wird. Diese Ausführungsform weist einen zur in Fig.3 dargestellten Ausführungsform ähnlichen Aufbau mit kantenemittierender Laserdiode 5' und hemisphärischem Resonator auf. Zwischen den als Hohlspiegel ausgebildeten Resonatorspiegel 6d und der kantenemittierender Laserdiode 5' ist eine Blende 11 eingebracht, deren Öffnung für ausgedehnte, höhere Moden eine Dämpfungswirkung entfaltet und damit die Modenselektion der in Fig.3 dargestellten Ausführungsform verstärkt. Die Emission der kantenemittierenden Laserdiode 5' kann durch eine Zylinderlinse 9c in Richtung der Fast axis kollimiert werden.

In Fig.6 wird die schematische Darstellung einer fünften erfindungsgemässen Laserquelle mit einer vertikal emittierenden Laserdiode (VCSEL) 12 als strahlungserzeugender Laserdiode und einer Monomodefaser 7 als modenselektiver Komponente dargestellt. Die vertikal emittierenden Laserdiode (VCSEL) 12 wird in zu einer kantenemittierenden Laserdiode analoger Weise hinsichtlich der spiegelnden Wirkung ihrer Oberfläche modifiziert, um in einer erfindungsgemässen Laserquelle verwendet zu werden. Je nach Auslegung müssen gegebenenfalls vorhandene Spiegel, die beispielsweise als Distributed Bragg Reflector (DBR) ausgebildet sind, entfernt werden oder in ihrer Transmission erhöht werden, um eine Rückkopplung des Strahlungsfeldes in die vertikal emittierenden Laserdiode (VCSEL) 12 zu ermöglichen. Ein geeignetes Verfahren zur Entfernung von Beschichtungen bzw. Spiegeln steht beispielsweise in Form des Plasmaätzens zur Verfügung. Vorteilhaft ist bei einer vertikal emittierenden Laserdiode (VCSEL) 12, dass die Emission einen runden Querschnitt und meist auch eine im Vergleich zu kantenemittierenden Laserdioden grössere Fläche aufweist. Die emittierte Strahlung wird über eine Linse 10b in eine Monomodefaser 7 eingekoppelt, die an ihrem Ende mit einem teilweise durchlässigen Auskoppelspiegel 8 versehen ist. Die aus diesem Auskoppelspiegel 8 austretende Strahlung kann mit einer Linse 10a kollimiert werden. Anstelle der angeführten VCSEL kann erfindungsgemäss auch eine speziellere Ausführungsform eines vertikal emittierenden Lasers, wie z.B. eine NECSEL verwendet werden.

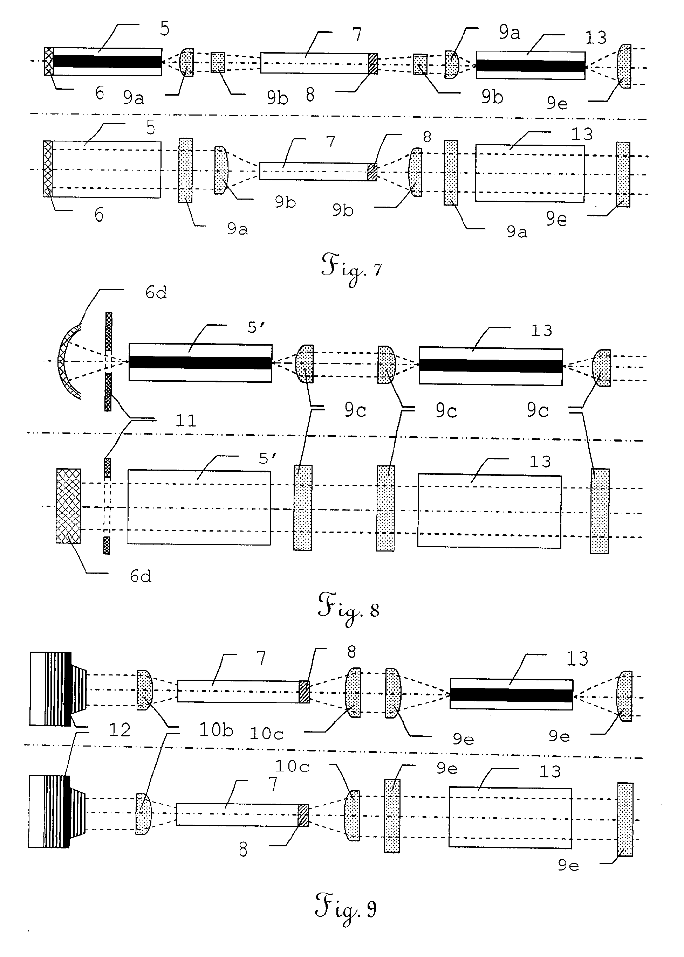

Die Fig.7 bis Fig.9 zeigen Ausführungsformen, bei denen die in den Fig.2, Fig.5 und Fig.6 gezeigten Ausführungsformen mit einer verstärkenden Laserdiode in einer Master Oscillator Power Amplifier-Konfiguration verbunden sind. In allen diesen Konfigurationen wird der Kavität eine verstärkende Laserdiode nachgeschaltet, die hier als herkömmlicher Kantenemitter ausgebildet ist, bei dem die reflektierende Wirkung der Seitenflächen aufgehoben und die Transmission maximiert wurde. Damit wird diese Laserdiode lediglich als verstärkendes Medium verwendet, ohne Bestandteil eines Resonators zu sein.

Fig.7 stellt die schematische Darstellung einer sechsten erfindungsgemässen Laserquelle mit einer kantenemittierenden Laserdiode 5, einer Monomodefaser 7 als modenselektiver Komponente und einer verstärkenden Laserdiode 13 dar. Die Kavität der Laserquelle weist eine kantenemittierende Laserdiode 5 mit Resonatorspiegel 6, die Zylinderlinsen 9a und 9b sowie eine Monomodefaser 7 mit Auskoppelspiegel 8 auf. Die von dieser Kavität emittierte Strahlung wird über zwei weitere Zylinderlinsen 9b und 9a in eine verstärkende Laserdiode 13 eingekoppelt, nach deren Durchgang die Strahlung wieder durch eine Zylinderlinse 9e kollimiert werden kann.

Fig.8 stellt die schematische Darstellung einer siebten erfindungsgemässen Laserquelle mit einer kantenemittierenden Laserdiode 5', einer Blende 11 als modenselektiver Komponente und einer verstärkenden Laserdiode 13 dar. Die als hemisphärischer Resonator ausgestaltete Kavität der Laserquelle weist eine kantenemittierende Laserdiode 5' mit einem Hohlspiegel als Resonatorspiegel 6d und einer Blende 11 auf. Die von kantenemittierenden Laserdiode 5' emittierte Strahlung wird über ein Paar gleichartiger Zylinderlinsen 9c kollimiert und in die verstärkende Laserdiode 13 eingekoppelt, nach deren Durchgang die Strahlung wieder durch eine weitere Zylinderlinse 9c kollimiert werden kann.

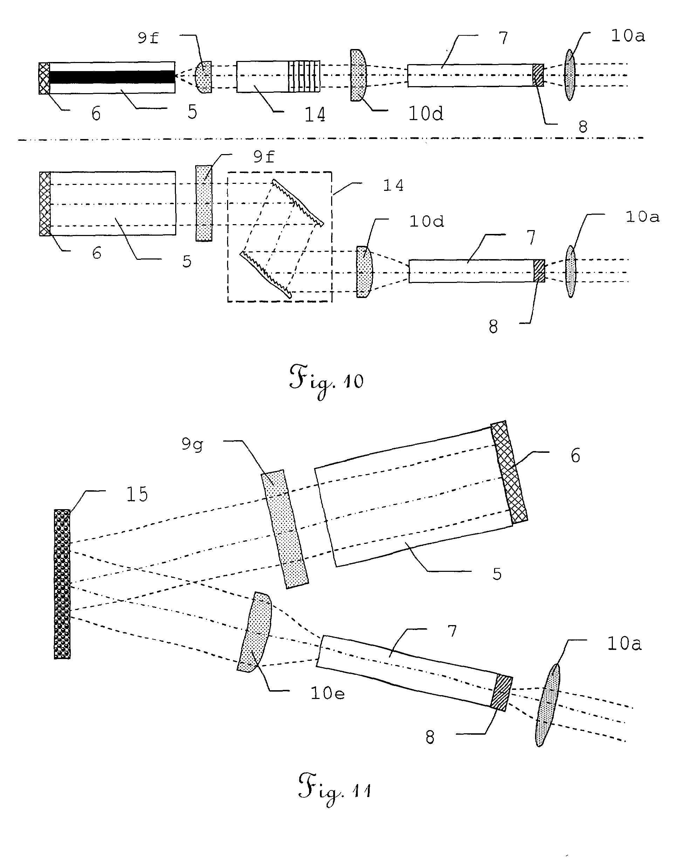

Fig.9 stellt die schematische Darstellung einer achten erfindungsgemässen Laserquelle mit einer vertikal emittierenden Laserdiode (VCSEL) 12, einer Monomodefaser 7 und einer verstärkenden Laserdiode 13 dar. Die Kavität der Laserquelle weist eine vertikal emittierende Laserdiode (VCSEL) 12, eine Linse 10b sowie eine Monomodefaser 7 mit Auskoppelspiegel 8 auf. Die von dieser Kavität emittierte Strahlung wird über eine Linse 10c und eine Zylinderlinse 9e in eine verstärkende Laserdiode 13 eingekoppelt, nach deren Durchgang die Strahlung wieder durch eine Zylinderlinse 9e kollimiert werden kann.

Fig.10 und Fig.11 zeigen schematisch die Verwendung von Komponenten mit negativer Dispersion zur Kompression von Laserpulse. Durch die gegenüber einer unmodifizierten Laserdiode grössere Resonatorlänge, die durch die Verwendung einer externen Kavität erzeugt wird, kommt es zu einer Erhöhung der Pulslänge, so dass eine Pulskompression als Kompensation vorteilhaft ist. Darüber hinaus kann durch eine solche Kompression die zur Verfügung stehende Pulsspitzenleistung erhöht werden.

Fig.10 stellt eine neunte erfindungsgemässe Laserquelle mit einer kantenemittierenden Laserdiode 5, einer Monomodefaser 7 und einem Gitterpaar 14 zur Pulskompression schematisch dar. Bei dieser Ausführungsform wird in der Kavität zwischen kantenemittierender Laserdiode 5 und Monomodefaser 7 ein Gitterpaar 14 zur Erzeugung negativer Dispersion angeordnet. In diesem Bereich wird der Strahlgang durch eine Zylinderlinse 9f und eine Linse 10d parallelisiert.

In Fig.11 wird die schematische Darstellung einer zehnten erfindungsgemässen Laserquelle mit einer kantenemittierenden Laserdiode 5, einer Monomodefaser 7 und einem Gires-Tournois-Interferometer 15 zur Pulsbeeinflussung bzw. Pulskompression gezeigt. Bei dieser Ausführungsform wird zur Erzeugung negativer Dispersion in die Kavität zwischen kantenemittierender Laserdiode 5 und Monomodefaser 7 ein Gires-Tournois-Interferometer 15 eingebracht. In diesem Bereich wird der Strahlgang durch eine Zylinderlinse 9g und eine Linse 10e parallelisiert. Durch die Faltung des Strahlgangs werden darüber hinaus eine verkürzte Bauart und damit eine platzsparende Integration in ein geodätisches Gerät ermöglicht. Eine Pulsbeeinflussung erlaubt es beispielsweise, eine gekrümmte Emissionswellenfront zu vermeiden bzw. zu korrigieren. Diese Problematik ist relevant, wenn durch thermische Veränderungen der Kavität während der Anregung eine transientenartige Modenbildung auftritt. Dabei wird am Rand der Kavität früher Strahlung emittiert, als in deren Mitte, so dass eine gekrümmte Emissionswellenfront entsteht, die z.B. bei einem geneigten Ziel zu Fehlmessungen führen kann. Durch die pulsbeeinflussende Wirkung von dispersiven oder sättigbar absorbierenden Strukturen kann, neben weiteren Effekten, eine homogenisierende Wirkung erzielt werden.

Es versteht sich, dass diese dargestellten Figuren nur Beispiele möglicher Ausführungsformen darstellen. So können die genutzten Komponenten auch in anderen Zusammenstellungen und Abfolgen erfindungsgemäss verwendet werden. Darüber hinaus liegt es im Handeln des Fachmanns ergänzende oder alternative optische Komponenten, beispielsweise mit diffraktiver Wirkung, sowie allgemein in der Laserphysik bzw. -technik verwendete Komponenten gleicher oder ähnlicher Wirkung bzw. Funktionalität zu verwenden. In den Darstellungen wurden notwendige elektronische Steuer- und Versorgungsanteile sowie Montagekomponenten lediglich aus Gründen der Anschaulichkeit nicht dargestellt.

## Patentansprüche

1. Geodätisches Gerät (1), insbesondere Totalstation Oder Entfernungsmesser,
mit einer Laserquelle mit wenigstens einer strahlungserzeugenden Laserdiode (2b, 5,5', 5", 12),
**dadurch gekennzeichnet, dass**
der strahlungserzeugenden Laserdiode (2b,5,5',5",12), eine externe Kavität mit wenigstens einer modenselektiven Komponente (2d,7,6a,6b,6c,11) zugeordnet ist, wobei durch die modenselektive Komponente (2d,7,6a,6b,6c,11) eine Single-Mode-Charakteristik der emittierten Laser-Strahlung (S) erzeugt wird.

2. Geodätisches Gerät (1) nach Anspruch 1,
**dadurch gekennzeichnet, dass**
die modenselektive Komponente (7) eine Monomodefaser (7), ist, insbesondere mit einer als Resonatorspiegel ausgebildeten Endfläche.

3. Geodätisches Gerät (1) nach Anspruch 2,
**dadurch gekennzeichnet, dass**
die Monomodefaser (7) als Faser mit einer geometrisch von der Zylinderform abweichenden Innenseite ausgebildet ist, insbesondere mit einer konischen oder gekrümmten Form.

4. Geodätisches Gerät (1) nach Anspruch 2,
**dadurch gekennzeichnet, dass**
die Monomodefaser (7) als Gradientenfaser mit in Faserrichtung veränderlichem Brechungsindex-Profil ausgebildet ist.

5. Geodätisches Gerät (1) nach Anspruch 1,
**dadurch gekennzeichnet, dass**
die modenselektive Komponente (2d,6a,6b,6c,11) eines der folgenden Elemente ist
• Blende (11),
• Resonatorspiegel (6a,6b,6c) für einen modenselektiven Resonatoraufbau,
• Dünnschicht-Wellenleiter.

6. Geodätisches Gerät (1) nach einem der vorangehenden Ansprüche,
**dadurch gekennzeichnet, dass**
die emittierte Laser-Strahlung (S) eine Pulsform mit einer Pulsdauer kleiner als 500 ns aufweist.

7. Geodätisches Gerät (1) nach einem der vorangehenden Ansprüche,
**dadurch gekennzeichnet, dass**
durch die modenselektive Komponente (2d,7,6a,6b,6c,11) ein Single-Mode-Modus der strahlungserzeugenden Laserdiode (2b,5,5',5",12) gewährleistet wird.

8. Geodätisches Gerät (1) nach einem der vorangehenden Ansprüche,
**dadurch gekennzeichnet, dass**
durch die modenselektive Komponente (2d,7,6a,6b,6c,11) die Laser-Strahlung der im Multi-Mode-Modus emittierenden strahlungserzeugenden Laserdiode (2b,5,5',5" ,12) beeinflusst wird.

9. Geodätisches Gerät (1) nach einem der vorangehenden Ansprüche,
**dadurch gekennzeichnet, dass**
die Kavität wenigstens eine, insbesondere anamorphotische, Ein- oder Auskoppeloptik (2c) aufweist.

10. Geodätisches Gerät (1) nach einem der vorangehenden Ansprüche,
**dadurch gekennzeichnet, dass**
die Laserquelle wenigstens eine weitere strahlungsverstärkende Laserdiode (13) aufweist, insbesondere zur Verstärkung einer von der strahlungserzeugenden Laserdiode (2b,5,5',5" ,12) eingekoppelten Strahlung.

11. Geodätisches Gerät (1) nach einem der vorangehenden Ansprüche,
**dadurch gekennzeichnet, dass**
die Komponenten der Kavität auf einer gemeinsamen Grundplatte (2a) angeordnet sind.

12. Geodätisches Gerät (1) nach einem der vorangehenden Ansprüche,
**dadurch gekennzeichnet, dass**
die strahlungserzeugende Laserdiode (2b,5,5',5",12) als VCSEL-Laser oder NECSEL-Laser ausgebildet ist.

13. Geodätisches Gerät (1) nach einem der vorangehenden Ansprüche,
**dadurch gekennzeichnet, dass**
die Laserquelle zur Emission von Laser-Strahlung (S) mit einer ebenen Emissionswellenfront ausgebildet ist, insbesondere vermittels einer pulsformenden Komponente in der Kavität.

14. Geodätisches Gerät (1) nach einem der vorangehenden Ansprüche,
**dadurch gekennzeichnet, dass**
die Laserquelle ein sättigbar absorbierendes und/oder dispersives Element aufweist, insbesondere als pulsformende Komponente nach Anspruch 13,
vorzugsweise ein Gires-Tournois-Interferometer (15), ein Gitterpaar (14) oder ein Prismenpaar.

15. Geodätisches Gerät (1) nach einem der vorangehenden Ansprüche,
**dadurch gekennzeichnet, dass**
die strahlungserzeugende Laserdiode (2b,5,5',5" ,12) wellenlängenstabilisiert ist.

16. Geodätisches Gerät (1) nach einem der vorangehenden Ansprüche,
**dadurch gekennzeichnet, dass**
der Laserquelle eine strahlformende Optik (2e) nachgeordnet ist.
